# EUROPEAN PATENT APPLICATION

(11) **EP 1 333 386 A1**
(43) Date of publication of application: **06.08.2003**
(21) Application number: 02000485.9
(22) Date of filing: 08.01.2002
(51) Int. Cl.: G06F 17/30

(54) **Providing web page for executing tasks by user, with data object**

(71) Applicant: SAP Aktiengesellschaft, 69190 Walldorf (DE)
(72) Inventor: Beringer, Jörg, 60431 Frankfurt am Main (DE); Hilgers, Peer, 68789 St.Leon-Rot (DE); Jensen-Pistorius, Leif, 76684 Östringen (DE); Wriessnegger, Klaus, 69120 Heidelberg (DE)
(74) Representative: Müller-Boré & Partner Patentanwälte

(57) **Abstract**

Providing a web page (301) for executing tasks by a user, with: looking up at a task-to-user assignment table to select a first predetermined task and a second predetermined task for the user; reading a data object that corresponds to the first selected task, the data object having information that also relates to the second predetermined task; composing a page with representations of a first area corresponding to the first predetermined task and with representations of a second area that that has an item (353-3) relating to the second predetermined task.

## Description

### Field of the Invention

The present invention generally relates to data processing and, more particularly, relates to computer systems, computer programs, and methods that for providing, customizing and personalizing pages.

### Background of the Invention

Computer networks offer their users a huge amount of information. Examples are the World Wide Web (Internet) and company networks (intranet). Since searching information takes time, information must be structured to allow users to find the desired information in reasonable time.

Portals are web sites that offer a variety of services and resources in a structured way. Portals offer single gateways for accessing applications and information. Portals are used inside organization and outside organizations.

There is a need to deliver information to each user according to implicit or explicit preferences. Traditional portals focus on information or on application programs. Advanced portals should focus on information needed by a person to organize his or her work (organize by work intent).

The following references are useful:
- Publications by Sybase, Emeryville, USA (www.sybase.com), such as "The Sybase Enterprise Portal Solution. A Business Whitepaper",
- "The Portal Technology of PeopleSoft 8. Whitepaper August 2000" published by PeopleSoft.
- DE 10025990 A1,
- US 6,073,242,
- US 6,055,637,
- US 6,014,666,
- US 5,949,866,
- US 5,911,143, and
- EP 0 697 662

### Summary of the Invention

According to the present invention, data objects are used for task management through portals. Content is delivered to a user by representation in a page content depends on the work intent (i.e., number of predefined tasks) of the user or on dominant activities (also referred to as "workset").

### Brief Description of the Drawings

- FIG. 1: is a simplified diagram of a computer network system;
- FIG. 2: is a simplified organization diagram of an organization;
- FIG. 3: is the computer network with developer computer, portal computer and user computer;
- FIG. 4: is a visual presentation of a page;
- FIG. 5: is a task-to-user assignment table;
- FIG. 6: is an exemplary data object;
- FIG. 7: is a simplified flow-chart diagram of a method of the present invention;
- FIG. 8: illustrates a role-to-task assignment table; and
- FIG. 9: illustrates a further presentation.

### Computer System in General

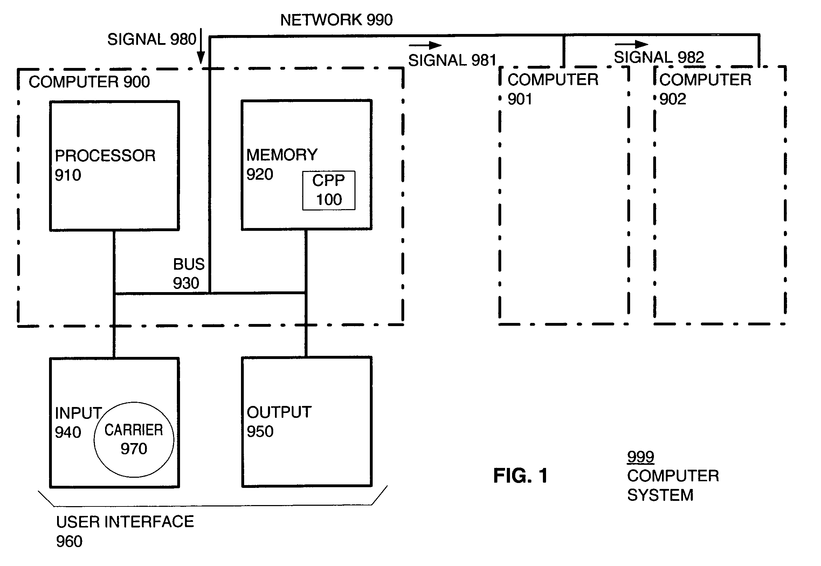

FIG. 1 illustrates a simplified block diagram of inventive computer network system 999 having a plurality of computers 900, 901, 902 (or 90q, with q=0...Q-1, Q any number).

Computers 900-902 are coupled via inter-computer network 990. Computer 900 comprises processor 910, memory 920, bus 930, and, optionally, input device 940 and output device 950 (I/O devices, user interface 960). As illustrated, the invention is present by computer program product 100 (CPP), program carrier 970 and program signal 980, collectively "program".

In respect to computer 900, computer 901/902 is sometimes referred to as "remote computer", computer 901/902 is, for example, a server, a router, a peer device or other common network node, and typically comprises many or all of the elements described relative to computer 900. Hence, elements 100 and 910-980 in computer 900 collectively illustrate also corresponding elements 10q and 91q-98q (shown for q=0) in computers 90q.

Computer 900 is, for example, a conventional personal computer (PC), a desktop and hand-held device, a multiprocessor computer, a pen computer, a microprocessor-based or programmable consumer electronics, a minicomputer, a mainframe computer, a personal mobile computing device, a mobile phone, a portable or stationary personal computer, a palmtop computer or the like.

Processor 910 is, for example, a central processing unit (CPU), a micro-controller unit (MCU), digital signal processor (DSP), or the like.

Memory 920 symbolizes elements that temporarily or permanently store data and instructions. Although memory 920 is conveniently illustrated as part of computer 900, memory function can also be implemented in network 990, in computers 901/902 and in processor 910 itself (e.g., cache, register), or elsewhere. Memory 920 can be a read only memory (ROM), a random access memory (RAM), or a memory with other access options. Memory 920 is physically implemented by computer-readable media, such as, for example: (a) magnetic media, like a hard disk, a floppy disk, or other magnetic disk, a tape, a cassette tape; (b) optical media, like optical disk (CD-ROM, digital versatile disk - DVD); (c) semiconductor media, like DRAM, SRAM, EPROM, EEPROM, memory stick, or by any other media, like paper.

Optionally, memory 920 is distributed across different media. Portions of memory 920 can be removable or non-removable. For reading from media and for writing in media, computer 900 uses devices well known in the art such as, for example, disk drives, tape drives.

Memory 920 stores support modules such as, for example, a basic input output system (BIOS), an operating system (OS), a program library, a compiler, an interpreter, and a text-processing tool. Support modules are commercially available and can be installed on computer 900 by those of skill in the art. For simplicity, these modules are not illustrated.

CPP 100 comprises program instructions and - optionally - data that cause processor 910 to execute method steps of the present invention. Method steps are explained with more detail below. In other words, CPP 100 defines the operation of computer 900 and its interaction in network system 999. For example and without the intention to be limiting, CPP 100 can be available as source code in any programming language, and as object code ("binary code") in a compiled form. Persons of skill in the art can use CPP 100 in connection with any of the above support modules (e.g., compiler, interpreter, operating system).

Although CPP 100 is illustrated as being stored in memory 920, CPP 100 can be located elsewhere. CPP 100 can also be embodied in carrier 970.

Carrier 970 is illustrated outside computer 900. For communicating CPP 100 to computer 900, carrier 970 is conveniently inserted into input device 940. Carrier 970 is implemented as any computer readable medium, such as a medium largely explained above (cf. memory 920). Generally, carrier 970 is an article of manufacture comprising a computer readable medium having computer readable program code means embodied therein for executing the method of the present invention. Further, program signal 980 can also embody computer program 100. Signal 980 travels on network 990 to computer 900.

Having described CPP 100, program carrier 970, and program signal 980 in connection with computer 900 is convenient. Optionally, program carrier 971/972 (not shown) and program signal 981/982 embody computer program product (CPP) 101/102 to be executed by processor 911/912 (not shown) in computers 901/902, respectively.

Input device 940 symbolizes a device that provides data and instructions for processing by computer 900. For example, device 940 is a keyboard, a pointing device (e.g., mouse, trackball, cursor direction keys), microphone, joystick, game pad, scanner, disc drive. Although the examples are devices with human interaction, device 940 can also operate without human interaction, such as, a wireless receiver (e.g., with satellite dish or terrestrial antenna), a sensor (e.g., a thermometer), a counter (e.g., goods counter in a factory). Input device 940 can serve to read carrier 970.

Output device 950 symbolizes a device that presents instructions and data that have been processed. For example, a monitor or a display, (cathode ray tube (CRT), flat panel display, liquid crystal display (LCD), speaker, printer, plotter, vibration alert device. Similar as above, output device 950 communicates with the user, but it can also communicate with further computers.

Input device 940 and output device 950 can be combined to a single device; any device 940 and 950 can be provided optional.

Bus 930 and network 990 provide logical and physical connections by conveying instruction and data signals. While connections inside computer 900 are conveniently referred to as "bus 930", connections between computers 900-902 are referred to as "network 990". Optionally, network 990 comprises gateways being computers that specialize in data transmission and protocol conversion.

Devices 940 and 950 are coupled to computer 900 by bus 930 (as illustrated) or by network 990 (optional). While the signals inside computer 900 are mostly electrical signals, the signals in network are electrical, magnetic, optical or wireless (radio) signals.

Networking environments (as network 990) are commonplace in offices, enterprise-wide computer networks, intranets and the internet (i.e. world wide web). The physical distance between a remote computer and computer 900 is not important. Network 990 can be a wired or a wireless network. To name a few network implementations, network 990 is, for example, a local area network (LAN), a wide area network (WAN), a public switched telephone network (PSTN); a Integrated Services Digital Network (ISDN), an infra-red (IR) link, a radio link, like Universal Mobile Telecommunications System (UMTS), Global System for Mobile Communication (GSM), Code Division Multiple Access (CDMA), or satellite link.

Transmission protocols and data formats are known, for example, as transmission control protocol/internet protocol (TCP/IP), hyper text transfer protocol (HTTP), secure HTTP, wireless application protocol, unique resource locator (URL), a unique resource identifier (URI), hyper text markup language HTML, extensible markup language (XML), extensible hyper text markup language (XHTML), wireless application markup language (WML), Standard Generalized Markup Language (SGML) etc. Interfaces coupled between the elements are also well known in the art. For simplicity, interfaces are not illustrated. An interface can be, for example, a serial port interface, a parallel port interface, a game port, a universal serial bus (USB) interface, an internal or external modem, a video adapter, or a sound card. Computer and program are closely related. As used hereinafter, phrases, such as "the computer provides" and "the program provides", are convenient abbreviation to express actions by a computer that is controlled by a program.

### Detailed Description

For convenience, a list of references is provided prior to the claims. The invention is described for an enterprise portal, i.e. a portal for an intra-organization network; persons of skill in the art can apply the invention for other portals such as for customer, supplier, employee, campus or government portals.

The term "forward" is used to describe data transfer from a first computer to a second computer. Sometimes, the transfer comprises a prior request from the second computer ("pull"); sometimes the first computer forces the data into the second computer ("push"). Persons of skill in the art - who implement the present invention - can select details on a case by case base.

The term "user" stands for a person using a computer; where appropriate, these persons are classified into "content developer", "content administrator" and "content consumer". The term "organization" stands for any company, any governmental institution, an Internet community or an other group of persons that use a computer network.

The term "web page" stands for the technical representation of instructions that are interpreted by a browser to provide a presentation.

The term "content" stands for information that is relevent for a person in the organization. Content is created inside the organization (e.g., business data) or outside (e.g., public data from patent offices).

The term "presentation" stands for delivering content by the browser to the user when the browser interprets the page. For convenience, reference numbers are similar both for pages and the corresponding presentations (* added for the presentations). The presentation can be visual presentations (e.g., screen) or acoustical presentations (e.g., via loudspeaker); the invention is conveniently explained for visual presentations being representative examples.

The term "portal" indicates that a page offers a variety of services and resources in a structured way by having at least one user-selectable link to an application or to a further page. As mentioned, portals offer single gateways for accessing applications and information.

The term task (or "work") refers to predefined actions that the content consumer performs through interaction with a computer and considering content.

The term "functional area" refers to a portion of a presentation that presents information relating to a predefined task. It is not important for the present invention how areas are presented. For example, areas are buttons, frames, iframes, tables, boxes, tabs, drop-down menus, or hierarchy-tree structures.

The term "portal computer" refers to a computer that provides user personalized pages that consider the tasks assigned to the content consumer.

The term "portal engine" refers to the plurality of computer-programs, tables and any data structures that control the processor of the portal computer.

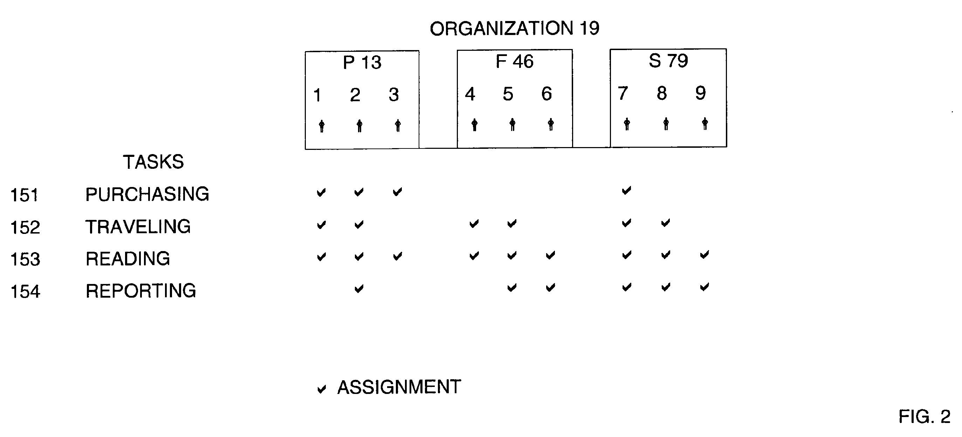

FIG. 2 is a simplified organization diagram of organization 19 (e.g., company). Organization 19 has different departments such as, for example
- purchase department 13 with persons 1-3,
- finance department 46 with persons 4-6, and
- security department 79 with persons 7-9.
   Below the departments, check symbols ( 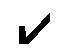 ) indicate person-to-task assignments. Persons are assigned to tasks such as
- purchasing task 151 (e.g., buy goods),
- traveling task 152 (e.g., visit business partners),
- reading task 153 (e.g., read corporate news, weather reports, or security alerts), and
- reporting task 154 (e.g., report business results or security related events).

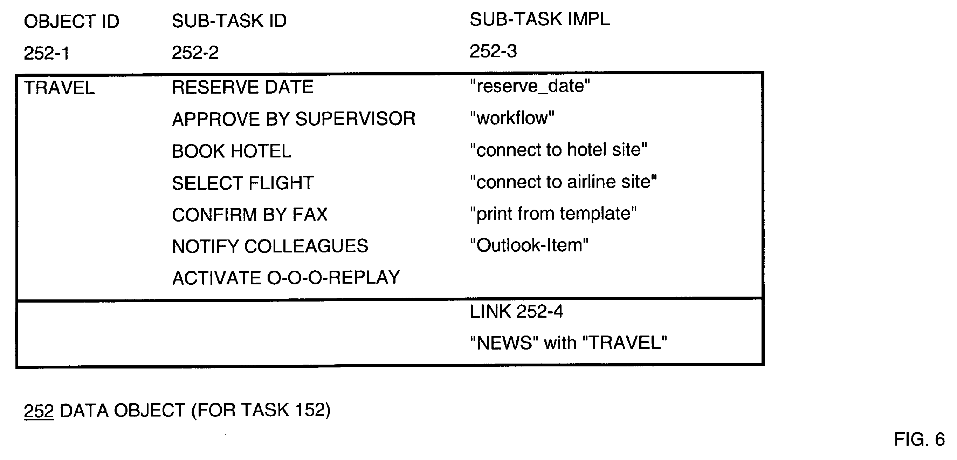

The examples in parenthesis are sub-tasks, details are explained in connection with FIG. 6. Assigned tasks are dominant tasks that are most likely performed by these persons (content consumers). Optionally, a person also performs a task he or she is not assigned to.

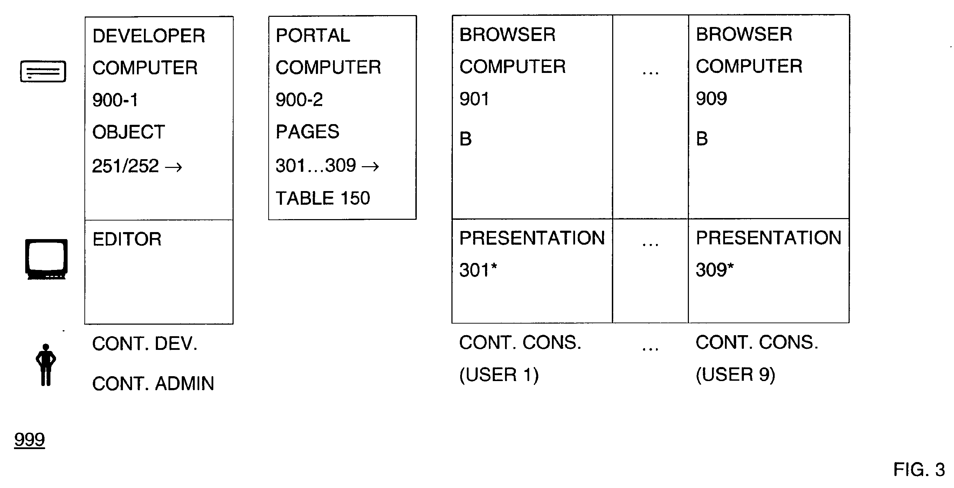

Details of the invention are explained for exemplary user 1, i.e. person 1 of department 13. A computer (901, cf. FIG. 3) presents a page (301, cf. FIG. 3) with most relevant information for user 1. User 1 is assigned to the following tasks:
- purchasing task 151,
- traveling task 152 and
- reading task 153.

For user 1, reading task 153 is limited to read "General News" and "Whether Reports". Reading "Security Alerts" is not primarily relevant.

FIG. 3 again illustrates computer network 999 (cf. FIG. 1) with the following computers: developer computer 900-1, portal computer 900-2, and user computers 901-909. As indicated by pictograms, FIG. 3 illustrates computers, presentations on screens and persons.

The content developer operates computer 900-1 to create content. Optionally, an administrator also operates computer 900-1 to modify content. Both use support tools such as editors. Computer 900-1 provides data objects 251/252 according to the present invention and forwards data object 251/252 to portal computer 900-2 (arrow symbol).

As used herein, exemplary data object 251 relates to purchasing task 151 (cf. FIGS. 2, 6); data object 252 relates to traveling task 152 (cf. FIG. 2). As indicated by arrows, computer 900-1 forwards object 251/252 to portal computer 900-2 (arrow symbol).

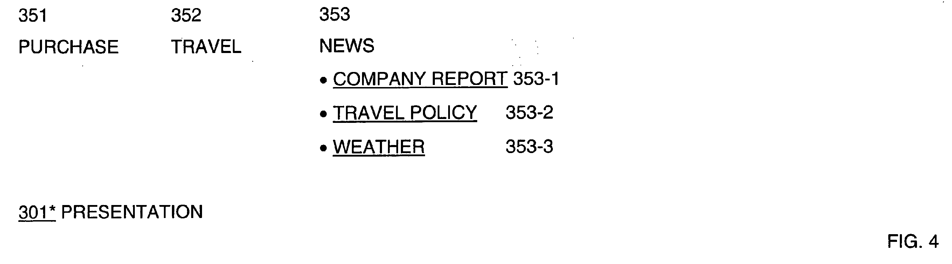

Portal computer 900-2 generates different portals pages 301-309 (cf. FIG. 4) personalized for each user 1 to 9, respectively. It is well known in the art how a computer automatically generates a page, for example, in markup language (HTML).

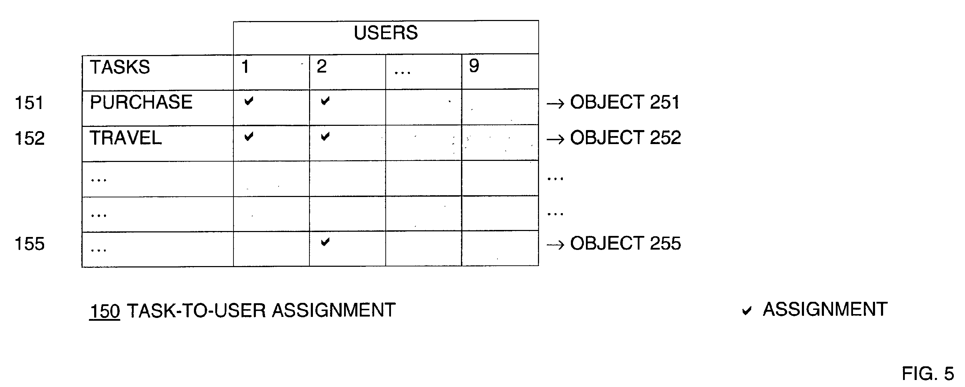

According to the present invention, portal computer 900-2 provides pages 301-309 by evaluating objects 251/252 (cf. FIG. 6) and task-to-user assignment table 150 (cf. FIG. 5). User computers 901-909 have browsers (acronym "B") to present pages 301-309 to users 1 to 9, respectively. FIG. 4 illustrates an example on how portal page 301 is presented by the browser on computer 901.

FIG. 4 illustrates visual presentation 301* of page 301 (by browser B). The figure is simplified and therefore does not show well-known functions such as log-in, display of time, access to employee service functions access to company intranet or to the Internet, or the like. Presentation 301* provides content and concentrates on the tasks that user 1 is invited to start from presentation 301*. Preferably, presentation 301* appears after user 1 has logged in.

For each task, the browser presents dedicated functional areas.

In the example of FIG. 4, the areas are:
- button 351 guiding the user to purchasing task 151,
- button 352 guiding the user to traveling task 152,
- frame 353 to immediately perform reading task 153, being a frame with the header "News". The frame has items (e.g., hyperlinks) to further presentations of "Company Report" 353-1, "Travel Policy" 353-2 and "Weather" 353-3.

Buttons 351 and 352 invite the user to navigate to tasks 152 and 152, respectively. Optionally, some areas can be hierarchically arranged below a further area; for example, buttons 351 and 352 can be arranged in a "my work" area. This is convenient, but not important.

It is an advantage of the invention, that the presentation for task reading 153 (i.e., "news") is adapted to task traveling 152. In other words, the user who is reading the news, is also informed about travel relevant information. In this case, the user receives the latest "Travel Policy".

This corresponds to the idea that traveling also comprises to read the travel policy. In other words, the invention allows cross-task transferring of information.

FIG. 5 illustrates task-to-user assignment table 150. As mentioned, table 150 is stored in portal computer 901. Users 1-9 (cf. FIG. 2) are listed in columns, tasks 151-155 are listed in rows, such as purchasing task 151 and traveling task 152. The total number of users (e.g., 9 user) and the total number of tasks (e.g. task 5) are not important for the present invention.

Check symbols indicate an assignment. For example, tasks 151 and 152 are assigned to users 1 and 2; task 155 is assigned to user 2 and so on.

The figures conveniently indicate data objects 251 and 252 (right side column) that correspond to tasks 151 and 152, respectively. The arrow symbols (right side) indicate that table 150 is conveniently pointing to data objects 151-255. Computer 900-2 provides page 301 (for user 1), while interpreting data objects 251 and 252; computer 900-2 provides page 302 (for user 2) while interpreting data objects 251, 252 and 255 and so on.

FIG. 6 illustrates exemplary data object 252 ("workset") for traveling task 152. As indicated in columns, data object 252 comprises:
- object identification 252-1 (e.g., TRAVEL),
- sub-task identification 252-2 (e.g., a predefined to-do-list),
- sub-task implementation 252-3 (e.g., program calls according to the list, here in self-explanatory code language).

When a person travels, this person needs to perform a variety of inter-related sub-tasks identified under 252-2, such as:
- reserve the travel date,
- get approval from a supervisor,
- find and book an hotel,
- select a flight,
- confirm hotel and flight by fax
- notify colleagues, and
- set an email program to a standard reply.

Preferably, the actions (cf. 252-2) are initiated when user 1 goes to area 352 (cf. FIG. 4). It is not required that portal computer 900-2 executes the actions; often, the implementation 252-3 is a link to program code on computer 901 or on a different computer (not shown).

According to the invention, sub-task implementations 252-3 provide corresponding actions, as for example:
- a link to a calendar to reserve the date (function call "reserve_date"),
- to initiate sending a query to the person's supervisor (trigger a predefined "workflow"),
- a link to an on-line hotel booking system, such as to Internet site of an hotel, or to the portal page of a hotel chain ("connect to hotel site")
- a link to an on-line flight booking system ("connect to airline site")
- a call to a program for sending facsimile from a predefined template ("print from template"),
- a call to an email program to notify other persons in the organization ("Outlook-Item" with "out-of-office-reply").

Link 252-4 relates traveling task 152 to reading task 153; the link specifies to include travel related news into area 353 (cf. FIG. 4, "travel policy").

Optionally, the links go to further pages, the plurality of pages that the user reaches from area 352 (for task 152) are referred to as "workspace" for that task.

Advantageously, object 252 is implemented in XML or other markup languages.

It is an advantage of the present invention that data object 252 is a single object that is originally provided in developer computer 900-1 and that is transferred to portal computer 900-2.

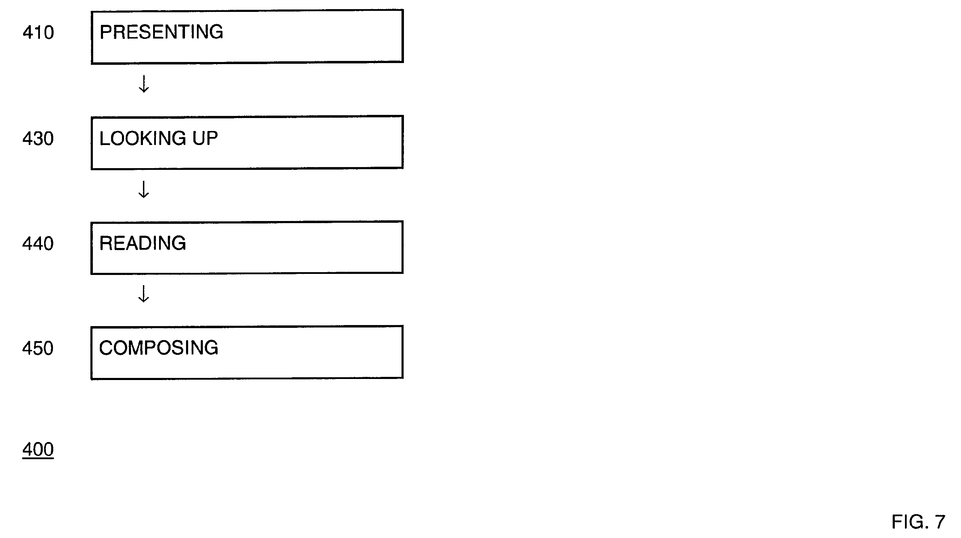

FIG. 7 is a simplified flow-chart diagram of method 400 of the present invention. Method 400 is a method for providing web page 301 for executing tasks by user 1. Method 400 comprises the following steps to be executed by computer 901-2:
looking up 430 at task-to-user assignment table 150 to select first predetermined task 152 and second predetermined task 153 for user 1; reading 440 a data object 252 that corresponds to the first selected task 152, data object 252 having information that also relates to the second predetermined task 153; composing 450 page 301 with representations of first area 252 corresponding to first predetermined task 152 and with representations of second area 253 that that has item 353-3 relating to second predetermined task 153.

Preferably, method 400 has the prior step of presenting 410 first area 351 and second area 352 to user 1 via a browser, wherein first and second areas 351, 352 correspond to first and second tasks 151, 152, respectively. Preferably, presenting the first and second areas comprises presenting tab icons as navigation items.

Data object 252 has been illustrated (cf. FIG. 6) for a simplified example. Data objects according to the present invention optionally comprise the following:
- User interface (UI) elements, such as overviews,
- Services, such as information services (reports),
- further computer objects to calculate and present business indicators (e.g., performance of organization),
- information that supports collaboration between users (e.g., user 1 and 2), such as profiles of interest (of users), subscription to news bulletins, membership in communities,
- services that further support the organization, such as access to databases, electronic learning, policy documents. Having tasks assigned to users is convenient for explanation. In organizations with a large number of users (e.g., 1000, 10.000, 100.000 or even more), the assignment is advantageously organized in hierarchy. A convenient hierarchy classification is known as "role". Functions (or "jobs") in the organization are described in an abstract level that is valid in many different organizations.

Examples for roles in a business organization are (with acronyms): administrative assistant (AA), chief financial officer (CFO), communications specialist (CS), communications specialist (CS), deputy controller (DC), development manager (DM), director of training and change management (DTCM), financial controller (FC), financial controller (FC), independent contractor (IC), information technology analyst (ITA), information technology analyst (ITA), information technology contract and vendor manager (ITCV), marketing director (MD), payroll team leader (PTL), product implementation manager (PIM), research manager (RM), resource planning manager (RPM), senior system developer (SSD), senior system developer (SSD), treasury manager (TM), and vice president (VP).

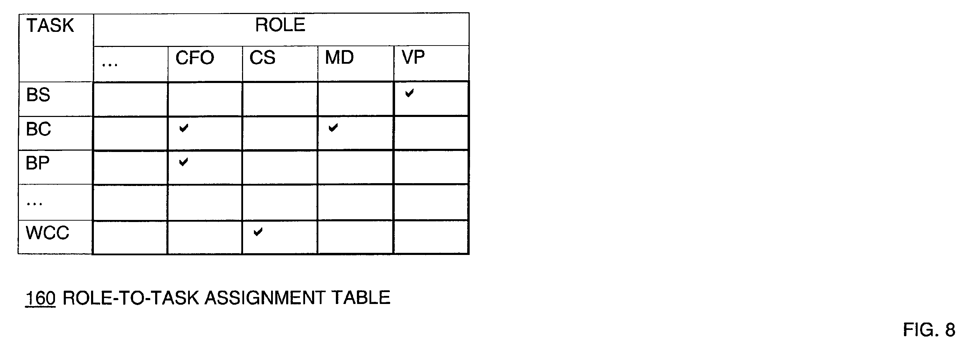

A different classification for tasks is presented as follows: Persons can be classified by the task they perform, for example: bank salesperson (BS), benefits controller (BC), bill payer (BP), branch overseer (BO), competition researcher (CR), corporate money watchdog (CMWD), course logistics caretaker (CLCT), customer caretaker (CCT), department budget manager (DBM), executive supporter (ES), facilities overseer (FOS), first-line supporter (FLS), funds manager (FM), headhunter (HH), incentive program participator (IPP), location scout (LS), meeting logistics handler (MLH), message communicator (MC), order overseer (OO), payment demander (PD), people caretaker (PCT), process improver (PI), project budget manager (PBM), project process improver (IPI), project surveyor (PS), property matchmaker (PM), sales tracker (ST), supply caretaker (SCT), trouble fixing overseer (TFO), vendor caretaker (VCT), and web content creator (WCC, cf. developer in FIG. 3). FIG. 8 illustrates role-to-task assignment table 160. Table 160 is stored in computer 900-2. Check symbols indicate the assignment. For convenience, only a few data objects and task are illustrated. Similar as explained above, when a user logs on, his or her role is determined (e.g., from a profile), and table 160 is used instead of table 150 (cf. FIG. 5).

For example, in the organization, a first user is the chief financial officer (CFO) and a second user is the marketing director (MD). Both are benefits controller (BC), i.e. they stay informed about the benefits provided by the organization to its members.

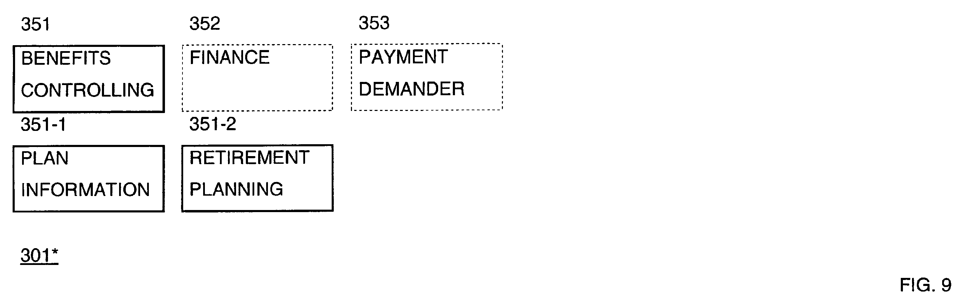

FIG. 9 illustrates presentation 301* to user 1 who is the first user (CFO). Presentation 301* has the appearance of a well-known tab strip. Functional areas are for "Benefits Controlling" 351, for "Finance" 352, for "payment demander" 353 and the like. Activated is area 351 (bold), de-activated are areas 352 and 353 (dashed).

Taking the area "Benefits Controlling" 351 as an example, the area is further divided into the sub-tasks "plan information" 351-1 and "retirement planning" 351-2. Further down the hierarchy (not illustrated), the sub-task "plan information" divides into sub-tasks relating to health insurers, life insurers, and employee compensation; the sub-task "retirement planning" divides into sub-tasks relating to investment management and the like. When user 1 activates areas 352 or 353 then the sub-task presentation changes as well.

The second user (MD) is presented functional areas (cf. 351-355) for "Benefits Controlling" and others (not illustrated). Some functional areas are equal for both users; some functional areas are different.

The invention has been explained in connection with a portal used inside an organization. It is also useful for portals that represent organization to the general public. Likewise, users are customers that are classified for example into
- first time visitors,
- registered customers, etc.

The tasks are invitations to perform predefined actions...

### References

- 1...9: users
- 100: CPP
- 101: portal engine
- 13: purchase department (P)
- 150: task-to-user assignment table
- 151: purchasing task
- 151...155: tasks
- 152: traveling task
- 153: reading task
- 154: reporting task
- 155: further task
- 160: role-to-task assignment table
- 19: organization
- 251...255: data objects
- 252-1: task ID
- 252-2: sub-task ID
- 252-3: sub-task implementation
- 252-4: link
- 301"...309*: presentations
- 301...309: portal pages
- 351...353: areas in presentations
- 400, 4xx: method and steps
- 46: finance department (F)
- 79: security department (S)
- 900-1: developer computer
- 900-2: portal computer
- 901...909: user computer
- 910: processor
- 920: memory
- 930: bus
- 940: input
- 950: output
- 960: user interface
- 980: signal
- 999: computer system
- B: browser

## Claims

1. A method (400) for providing a web page (301) for executing tasks by a user (1), the method (400) comprising the following steps to be executed by a computer (901-2):
looking up (430) at a task-to-user assignment table (150) to select a first predetermined task (152) and a second predetermined task (153) for the user (1);
reading (440) a data object (252) that corresponds to the first selected task (152), the data object (252) having information that also relates to the second predetermined task (153);
composing (450) a page (301) with representations of a first area (252) corresponding to the first predetermined task (152) and with representations of a second area (253) that that has an item (353-3) relating to the second predetermined task (153).

2. The method (400) of claim 1, having the prior step of presenting (410) a first area (351) and a second area (352) to the user (1) via a browser, first and second areas (351, 352) corresponding to first and second tasks (151, 152), respectively.

3. The method (400) of claim 2, wherein presenting the first and second areas comprises presenting tab icons as navigation items.

4. A computer-program product for controlling a processor, with instructions for performing the method of claims 1-3.

5. A computer system for performing the method of claims 1-3.
